# EUROPEAN PATENT SPECIFICATION

(11) **EP 0 930 577 B1**
(45) Date of publication and mention of the grant of the patent: **20.04.2005**
(21) Application number: 98403250.8
(22) Date of filing: 22.12.1998
(51) Int. Cl.: G06K 7/00

(54) **Switch for detecting the presence of a smart card in a read-write device**
Schalter zur Erkennung der Anwesenheit einer elektronischen Speicherkarte in einem Karte-Leser/Schreiber
Commutateur de détection de la présence d'une carte à mémoire électronique dans un dispositif de lecture écriture

(30) Priority: 26.12.1997 FR 9716566
(43) Date of publication of application: 21.07.1999
(73) Proprietor: ITT MANUFACTURING ENTERPRISES, INC., Wilmington, Delaware 19801 (US)
(72) Inventor: Bricaud, Hervé, 39100 Dole (FR); Pizard, Yves, 39100 Dole (FR)
(74) Representative: Kohn, Philippe

(56) References cited:
- FR-A- 2 578 072
- FR-A- 2 658 364
- FR-A- 2 737 321

## Description

The present invention relates to a system comprising a switch for detecting the presence of a smart card, also called a contact-type integrated-circuit card, in a read/write apparatus.

The invention relates more particularly to a system comprising a switch of the type having a body and means for controlling the switch, with which means the front transverse edge of the card or the lower face of the card engages.

Various designs of switches are known.

According to a first design, described and illustrated in document EP-A-0,474,519, the control means are made in the form of an elastically deformable control blade, a free end of which includes a ramp which is capable of engaging with the front transverse edge of the card and which has an actuation point which acts directly on the device for tripping the switch.

According to a second design, described and illustrated in document EP-A-0,587,497, the control means include a lever which is mounted so as to pivot on the switch and which has a nose with which the front transverse edge of the card can engage and a point for actuating the tripping device.

These designs, as well as those shown and described in FR-A-2.578.072, FR-A-2.737.321 or FR-A-2.658.364, have the drawback, in the read/write position, of applying an elastic force to the card which urges it towards the direction corresponding to extraction of the card, this force having to be counteracted by complementary card-braking means.

According to these designs, the value of the tripping force applied to the tripping device is directly related to the position of the card with respect to the control blade or to the control lever, in the read/write position.

Document WO-A-95/33243 proposes a design of a switch of the aforementioned type which makes it possible to remedy these drawbacks and according to which the control means include an elastically deformable control blade, a first end of which is embedded in a casing of the switch and the second end of which engages with a device for tripping the switch, and include a control lever which acts on the second end of the control blade and which is capable of pivoting about an axis parallel to the plane of the card in response to a control force which is applied to it by the front transverse edge of the card.

These various designs propose to make use of a tripping device of convex general shape which is elastically deformable in order to establish an electrical connection between two electrical contacts of the switch in response to an axial tripping force which is applied to it by the control blade, or by the control lever, in a direction approximately perpendicular to the plane of the card.

This type of tripping device is advantageous in that it makes it possible to produce a switch assembly which is very sensitive and which provides a sensation or tactile effect of the tripping action.

However, the use of a tripping device consisting of an additional component such as a monostable dome has the drawback of increasing the thickness, or height, of the switch and of increasing its cost.

It has already been proposed to produce the tripping device in the form of another, stationary contact blade forming part of the switch, but such a design requires this other blade to be electrically connected to the printed-circuit board and, in addition, again is laterally and/or longitudinally bulky and also bulky heightwise.

The object of the present invention is to provide a new design of a system comprising a switch of the aforementioned type which makes it possible to remedy these drawbacks.

To achieve this object, the invention provides a system comprising a printed circuit board and a switch, the switch designed to be mounted on said printed-circuit board, for detecting the presence of a smart card in a read/write apparatus, the switch having a casing and means for controlling tripping of the switch which means for controlling are adapted to engage with the front transverse edge of the card, and wherein the means for controlling the tripping comprise :
- an elastically deformable control blade, a first end of which is embedded in the casing of the switch and the second end of which engages with a device for tripping the switch; and
- a control lever which acts on the second end of the control blade and which is capable of pivoting about an axis parallel to the plane of the card in response to a control force which is applied to it by the front transverse edge of the card,
characterized in that the control blade is a conducting blade whose embedded first end is extended by a tab for electrical connection to a conducting track on the printed-circuit board, and in that the means for controlling tripping of the switch further comprise another conducting track on the facing upper face of the printed-circuit board with which other conducting track in the presence of the card in the inserted position, the second end of the control blade engages in order to cause electrical closure of the switch.

According to other characteristics of the invention:
- in the presence of the card in the inserted position, the control lever acts on the second end of the control blade, against the resilience of the blade;
- the control lever is made as one piece with the control blade;
- the control lever has a control ramp with which the front transverse edge of the card engages;
- the control blade is approximately plane and extends longitudinally in a direction approximately parallel to the direction of insertion of the card;
- the control blade is shaped like a hairpin with two branches which extend in a direction approximately parallel to the direction of insertion of the card, which are connected by an approximately 180° bend and among which the end of an upper first branch is embedded in a casing of the switch and the free end of the lower second branch is capable of engaging with the said other conducting track on the printed-circuit board;
- the lower second branch is extended beyond the said free end by at least one tab for vertical positioning of the control blade at rest;
- the second end of the control blade, which is capable of engaging with the said other conducting track, has a convex contact part whose convexity is turned towards the upper face of the printed-circuit board;
- the control lever is mounted so as to pivot about an axis approximately perpendicular to the direction of insertion of the card;
- the first end of the control blade is embedded in the material of the casing of the switch;
- the first end of the control blade is fixed into one element of the casing of the switch by hot riveting.

Other characteristics and advantages of the invention will appear on reading the following detailed description which may be understood by referring to the appended drawings in which:
- Figure 1 is an isometric perspective top view of a first embodiment of an electrical connector having a switch according to the teachings of the invention;
- Figure 2 is an isometric perspective bottom view of the assembly shown in Figure 1;
- Figure 3 is an isometric perspective top view of the switch element forming part of the assembly shown in Figures 1 and 2;
- Figure 4 is an isometric perspective bottom view of the element shown in Figure 3;
- Figure 5 is a detail, in cross-section on the line 5-5 in Figure 1, in which the switch is illustrated in the rest position;
- Figure 6 is a view similar to that of Figure 5, in which a smart card has been shown in the process of being inserted, the card bearing on the upper guiding face of the insulating support, and in the position corresponding to the moment at which the switch changes state, but with a zero contact bearing force;
- Figure 7 is a view similar to that in Figure 6, in which the smart card is shown in the position in which it is fully inserted longitudinally;
- Figure 8 is a view similar to that in Figure 7, in which the card is shown in its maximum raised position with respect to the upper face of the insulating support;
- Figures 9 to 16 are views similar to those in Figures 1 to 8, which illustrate a second raised embodiment of the assembly illustrated in Figures 1 to 8; and
- Figures 17 to 19 are three views similar to those in Figures 1, 2 and 3, which illustrate another embodiment of a switch according to the teachings of the invention.

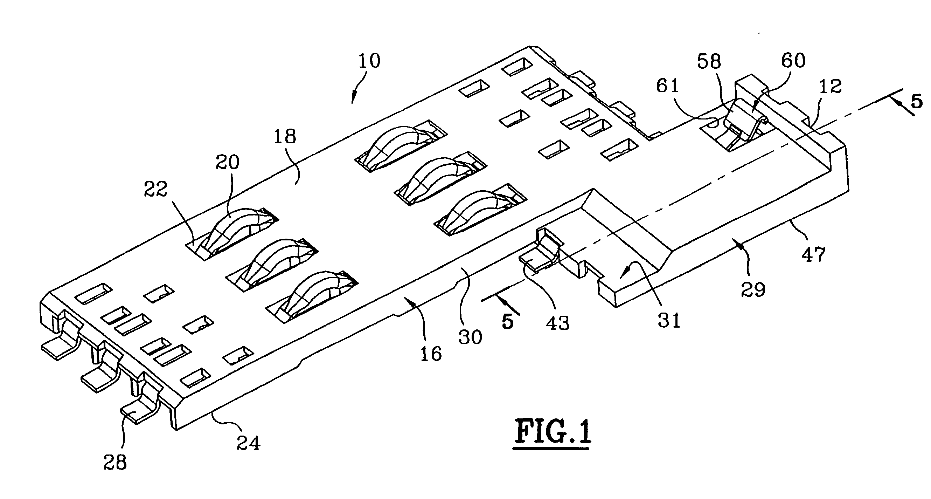

Figures 1 to 8 show an entire connector 10, having a built-in switch 12 for detecting the presence of a smart card C, also called a chip card, and incorporating end-of-travel stop means for insertion of this card C in the direction I.

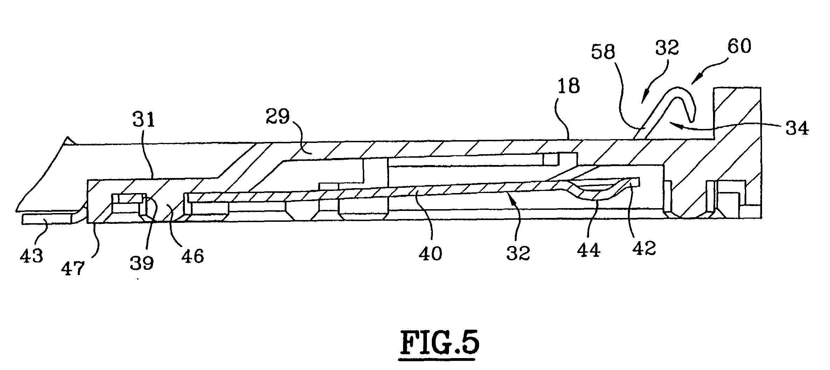

The connector 10 is designed to be mounted on a printed-circuit board P (see Figures 5 to 8) of a read/write apparatus (not shown), the read/write apparatus having its own means for guiding the card C during its insertion and optionally means for positioning the card C relative to the entire connector 10 which press on the card vertically.

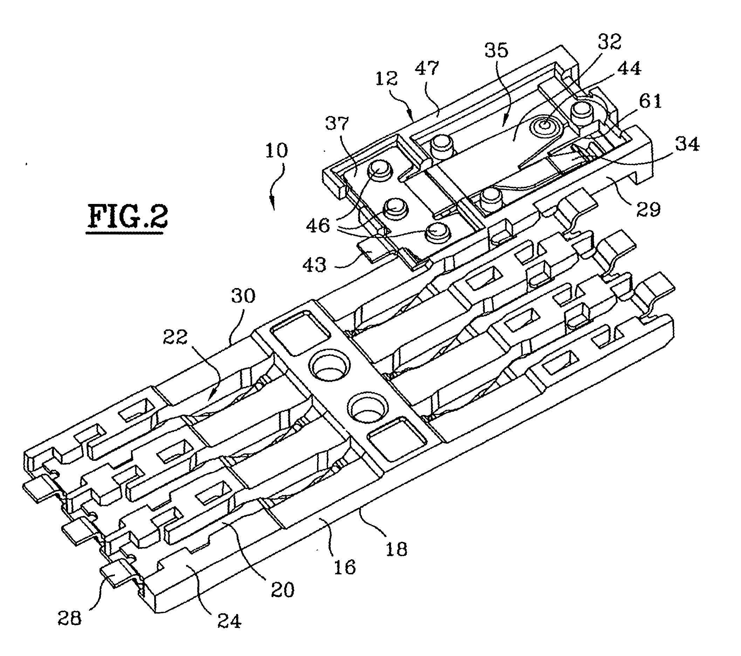

The main part of the connector 10 illustrated in Figures 1 and 2 essentially consists of a support 16 made of a moulded plastic insulating material.

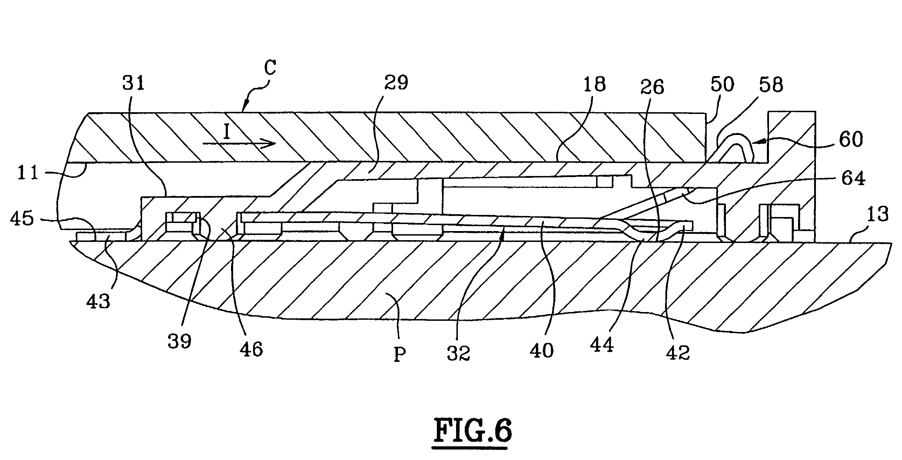

According to a known design, which is illustrated in document WO-A-95/33243 for example, the support 16 essentially consists of a horizontal plate which delimits a plane upper face 18 serving as a support for a plurality of elastically deformable electrical contact blades 20 which project into slots 22 formed in the support 16, the lower face 24 of which bears vertically, with regard to Figure 6, on the upper face 13 of the printed-circuit board P.

The contact blades 20 project from the upper face 18 of the support 16 in order to come into contact with the corresponding conducting areas on the card C and they are extended, in this embodiment, at the lower face 24 of the support 16, in the form of bent connection tabs 28 intended to be soldered to the conducting tracks on the upper face 13 of the printed-circuit board P, for example using the known technique of surface-mounting components.

The outputs 28 may also be pinned to the conducting areas of the printed-circuit board P or may simply be elastically held in bearing contact therewith.

The support 16 has a rectangular general outline and it includes an adjacent extension 29 which is moulded as one piece with the support 16.

The extension 29 serves as a support to the main components of a switch 12 for detecting the presence of the card C and it is adjacent to one of the longitudinal edges 30 of the main part of the support 16, parallel to the direction of insertion I.

The extension 29 is moulded as one piece and its thickness is reduced at the rear in order to form a step 31 allowing passage for raised parts, for example etched parts, formed on the corresponding part of the lower face 11 of the card C.

The upper face 18 of the support 16 is a continuous plane face which also constitutes the plane upper face of the extension 29.

This plane upper face 18 is capable of forming a bearing face on which the lower corresponding face of the card C can slide.

The built-in switch 12 essentially consists of a switch element 33 which is an element cut and folded from a sheet of electrically conductive material.

The switch element 33 is placed in a housing 35 accessible from the lower face 47 of the extension 29, coplanar with the lower face 24 of the support 16, in which it is held by three studs 46 arranged in a triangle which extend vertically downwards in order to pass through corresponding holes 39 formed in a rear heel 37 of the element 33 and the free ends of which are hot- crimped so that the body of the switch element 33 extends longitudinally forwards in the manner of a beam, the rear end 37 of which is embedded in the support 16, 29.

The heel 37 is extended rearwards by a bent connection tab 43 which is designed to be soldered to a first conducting track 45 on the upper face 13 of the printed-circuit board P associated with the electrical switching function.

The switch includes, according to the teachings of the invention, a conducting control blade 32 forming part of the switch element 33, which extends longitudinally forwards, approximately in the horizontal plane of the heel 37, inside the housing 35 and which includes, near its free second end 42, a convex part 44 whose convexity is oriented vertically downwards.

At rest, as may be seen in Figure 5, the lower face of the convex part 44 extends a short distance, for example 0.25 mm, from the lower face 24, 47 of the support 16, 29 and therefore from the upper face 13 of the board P.

The free end 42, 44 extends vertically in line with another conducting track 26 on the upper face 13 of the board P associated with the electrical switching function.

When the free end 42, 44 comes into contact with the conducting track 26, the control blade 32 then establishes an electrical connection between the tracks 45 and 26, that is to say that it closes the switch 12, which is a switch of the normally-open type.

Within the context of the invention, the conducting track 26 is therefore an element for tripping the switch with which the control blade 32, 42, 44 engages when the switch is actuated.

For this purpose, and according to a design known from document WO-A-95/33244, the control blade 32 is elastically deformable in the manner of an elastic beam due to the action of the forward or front transverse edge 50 of the card C which acts on a control lever 34, or actuation lever, for actuating the deformation of the control blade 32.

The control lever 34 forms part of the switch element 33. It acts on the control blade 32 with which it is made as one piece.

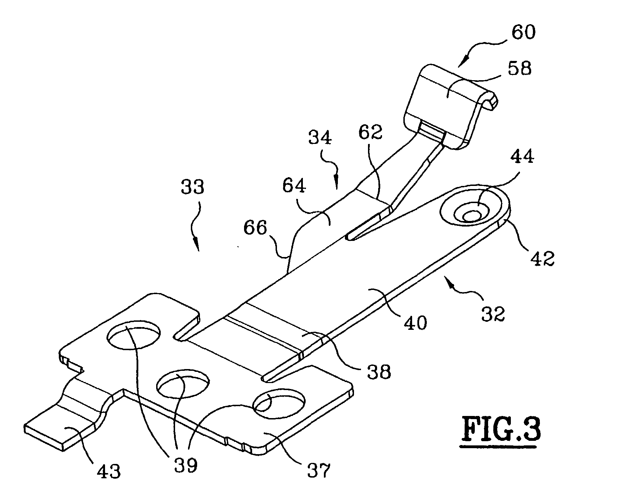

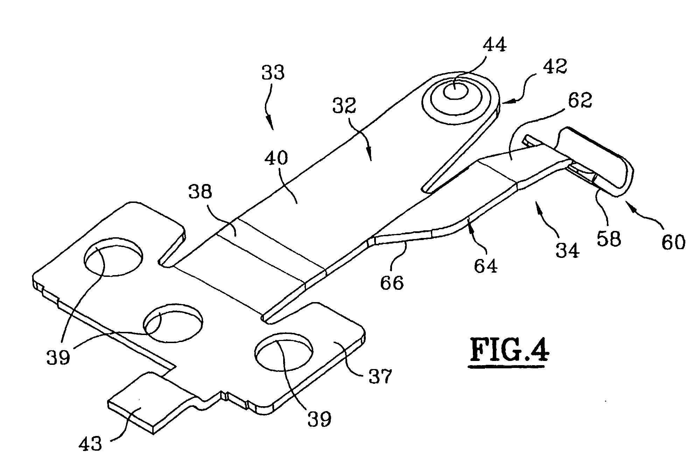

In fact, as may be seen in particular in Figures 3 and 4, the control lever 34 is in the form of a longitudinal arm 64 which is adjacent to the main part 40 of the control blade 32 to which it is connected approximately laterally half way along it by an elbow 66.

The front free end 60 of the control lever 34 is shaped as a "control pedal". For this purpose, it has an inclined control ramp 58 and projects beyond the upper face 18 through a hole 61 in the horizontal upper plate of the support 16.

Near its elbow-shaped rear connection end 66, the control lever 34 has a flexing region 62.

In the same way, the region 38, connecting the control blade 42 to the embedment heel 37, constitutes a flexing region forming a transverse pivot pin for the switch element 33, this pivot pin being parallel to the plane of the card C and perpendicular to the direction of insertion.

When the user inserts a card C into the read/write apparatus, the front transverse edge 50 of the card C (Figure 6) engages with the portion 58 of the control lever 34, this end portion 58 forming an approximately 45° ramp, and causes general pivoting of the assembly comprising the control lever 34 and the control blade 32, 40 substantially about the curved connection portion 38 which causes the switch to trip because of contact of the convex part 44 with the tripping track 26.

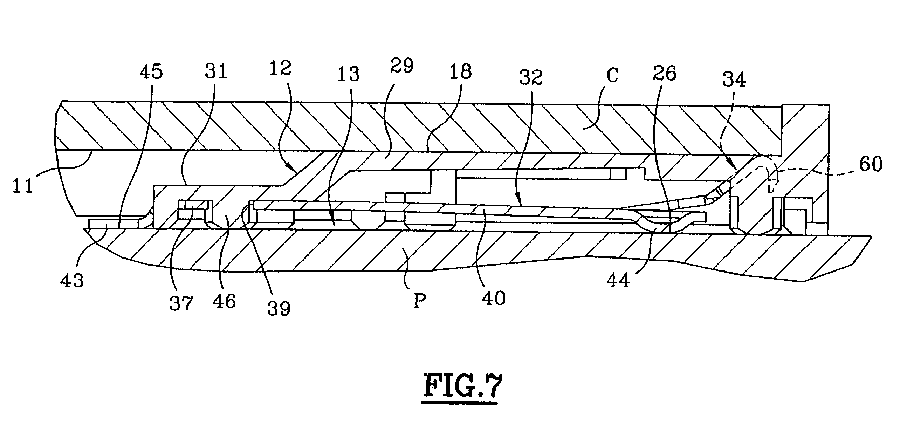

This deformation occurs gradually as soon as the front transverse edge 50 of the card C engages with the ramp 58, the continuation of the insertion force subsequently causing partial flexure of the control lever 34 with respect to the general plane of the main body 40 and of the arm 64 of the control blade 32 about the region 62, that is to say about a flexure axis approximately perpendicular to the direction I (see Figure 7).

By virtue of this flexing phenomenon, and in the inserted position of the card, the ramp-forming portion 58 lies below the lower face 11 of the card C without in this case applying any force to the card C against the insertion force.

When the user removes the card C, and because of the intrinsic resilience of the control blade 32 and of the arm 64 forming the control lever 34, these elements resume their position illustrated in Figure 5.

As has just been explained, the control lever 34 actuated by the front transverse edge 50 of the card C is mechanically uncoupled from the second end 42 of the control blade 32.

The high travel which results therefrom and the possibility of a significant overtravel for the control lever 34 make it possible, by a reduction effect, to reduce the actuation force applied by the front transverse edge of the smart card substantially, this being an ergonomic advantage from the user's standpoint and which is, above all, advantageous in terms of wear of the smart card, which generally is made of a soft plastic and is subjected to a large number of operations.

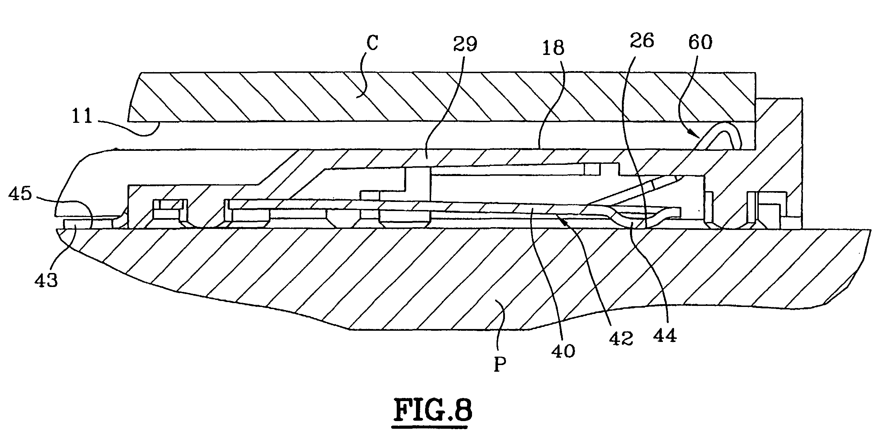

This high travel of the control lever 34 also makes it possible to absorb any differences in position of the smart card with respect to the plane of the upper face 18 of the insulating support 16 (see Figure 8) without causing substantial differences in the switching time because of the short travel of the contact and bearing point 44.

The design according to the invention:
- allows a high overtravel of the control lever 34 (of the order of 1 mm, approximately) while the travel of the convex part of the point 44 which bears on the contact pad 26 of the printed-circuit board P is about 0.25 mm; and
- prevents large variations in the force bearing on the contact pad 26 depending on the vertical distance separating the lower face 11 of the smart card C from the upper plane of the insulating support of the connector 16, which distance can vary between 0 and 0.35 mm, depending on the tolerances on the thickness of the smart card (± 0.08 mm) and on the system for guiding the latter, within which range of variation the force bearing on the electrical contact 26-44 reaches the value necessary and sufficient to guarantee good quality of the electrical contact.

The advantages of the design according to the invention are as follows:
- there is only one semi-permanent electrical contract point (instead of 2 usually) and therefore a more robust design;
- extreme simplification by combining all the functions into a single piece 33, thereby making it possible to minimize its manufacturing cost and to simplify the assembly processes, and therefore also to minimize the investment costs, something which is very important when it is desired to integrate the switching function in many different versions of a smart-card connector;
- miniaturization of the switching function, making it possible to respond to new applications requiring products with a very small total thickness and with a very small area occupied on the printed circuit;
- soldering the connection tab 43 connected to the "embedded" first end 47 of the control blade 32 also ensures that the component is mechanically fixed to the printed-circuit board P, which may prove to be very useful for certain connector configurations;
- mechanical protection of the electrical contact point 26, 44 by virtue of the structure of the insulating plastic casing-forming support 16, 29 of the switch 12 in a housing of which structure the switch element 33 with its control blade 32 is mounted, that is to say protection against unfortunate handling operations, but also, to a certain extent, protection from pollution by foreign bodies or from dust since the opening 68 in the casing 29 allowing passage for the pedal 58, 60 of the control lever does not lie above the contact point 26, 44 and since the concave enlarged upper face of the convex part 44 constitutes a second level of mechanical protection above the contact point.

The drawback over the prior solutions using a tripping element of the bistable-dome type, which is that there is not complete sealing of the contact point, is compensated for by certain of the above technical advantages: more robust design and protection provided by the configuration of the casing.

Moreover, the purpose of this design is not to be a substitute for those of the prior art which are described in documents WO-A-95/33244 and WO-A-95/33243 but to complement them in order to respond to other requirements for which the cost and miniaturization outweigh the lifetime and reliability.

Moreover, the fact that the contact pad 26 on the printed-circuit board is preferably gold-plated for this simplified switch version is not a troublesome constraint for applications of this type in which all the conducting tracks of the printed circuit are already gold-plated because of the technology employed for surface-mounting the other components.

Another indirect advantage of the design according to the invention is the configuration of the support 16, 29 forming the casing, which makes it possible, without modification other than the addition of a small switch and of a control lever without a connection tab, to obtain a version similar to that described in documents WO-A-95/33244 and WO-A-95/33243. This advantage may thus guarantee the possibility of users changing over to a "sealed" solution or, on the contrary, to a "low-cost" solution, depending on the initial choice, without the mechanical modification of his equipment or of his assembly processes, the sole precaution to be taken being to produce, on the printed circuit, a double implantation at the tracks 26 and 45 connected to the switch 12, 33.

The second embodiment illustrated in the figures is a so-called "raised" connector necessary for some applications, for example when the upper face 13 of the printed-circuit board P is partially encumbered by other components.

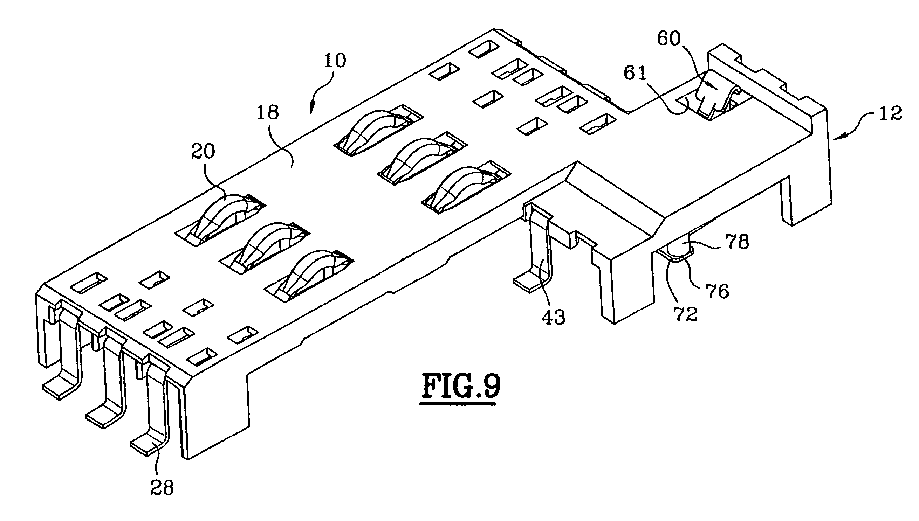

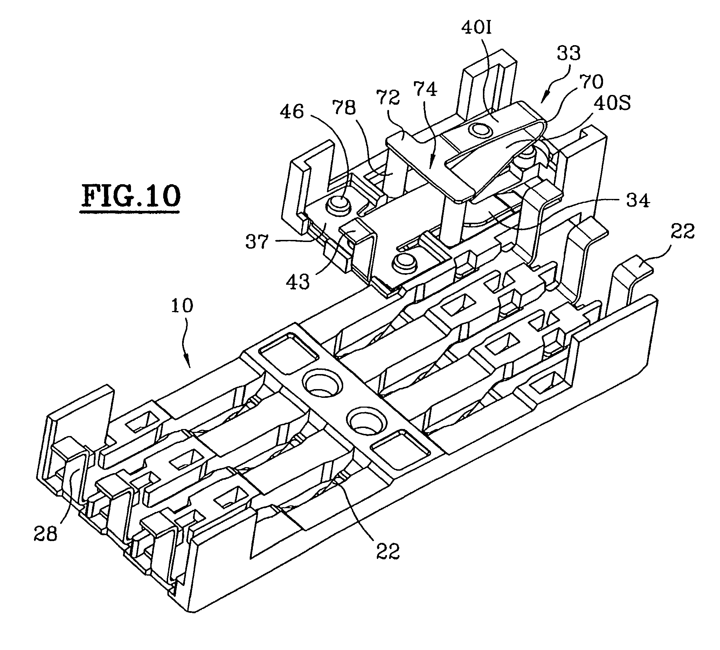

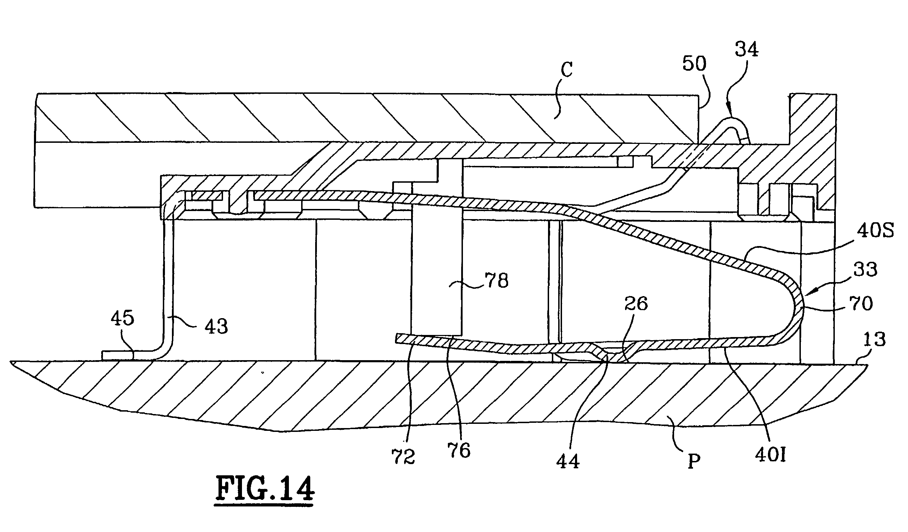

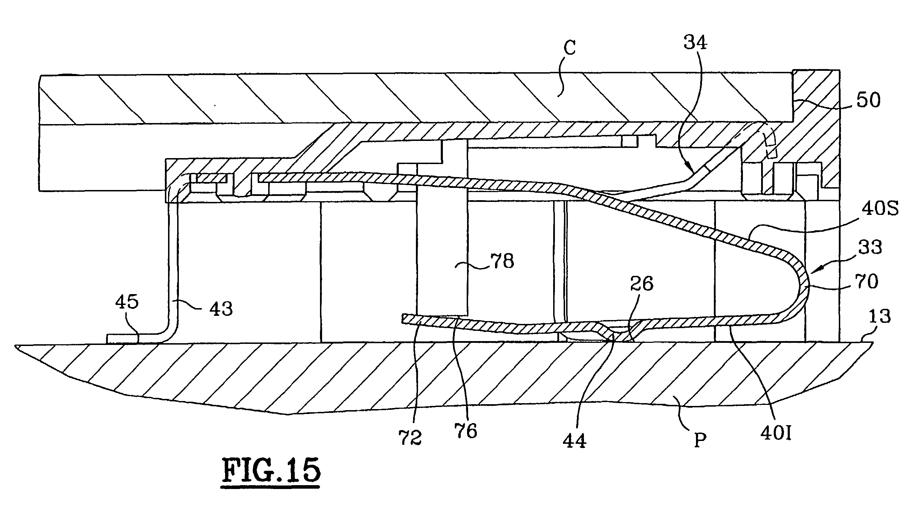

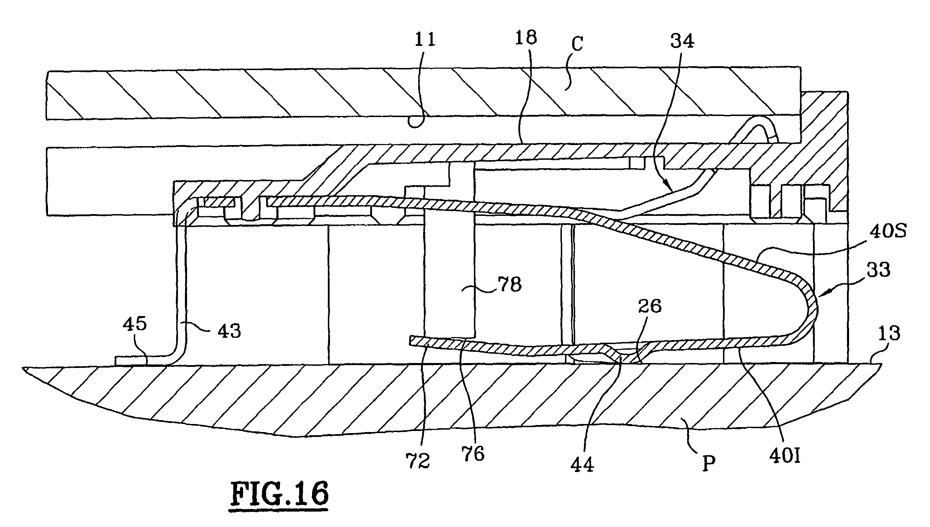

In order to adapt the design according to the invention described previously with reference to Figures 1 and 8, and as may be seen in Figures 9 to 16, it was firstly necessary to adapt the connection tab 43 by increasing the height of it, like that of the connection tabs of the contact blades of the connector 10.

Moreover, the design of the active part of the resilient and conducting contact blade has been modified in order to adopt a hairpin configuration as the vertical distance separating the convex contact point 44 from the track 26 varies with the height of the connector and of the casing 29 of the switch 12.

The hairpin design makes it possible, by virtue of the opening between its upper branch 40S and lower branch 401, to adapt the control blade 32 to the height of the insulating support 16, 29 by a simple adjustment of the tool for bending the control blade 32 with the two branches 40S and 401.

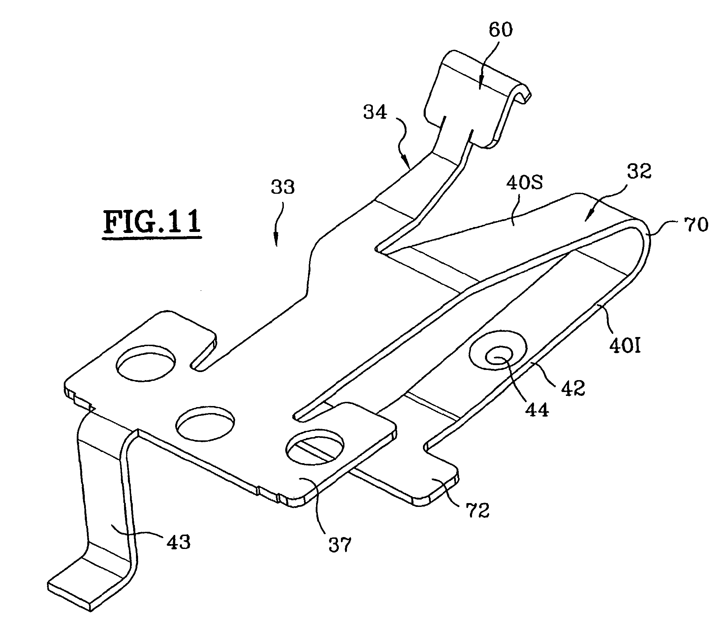

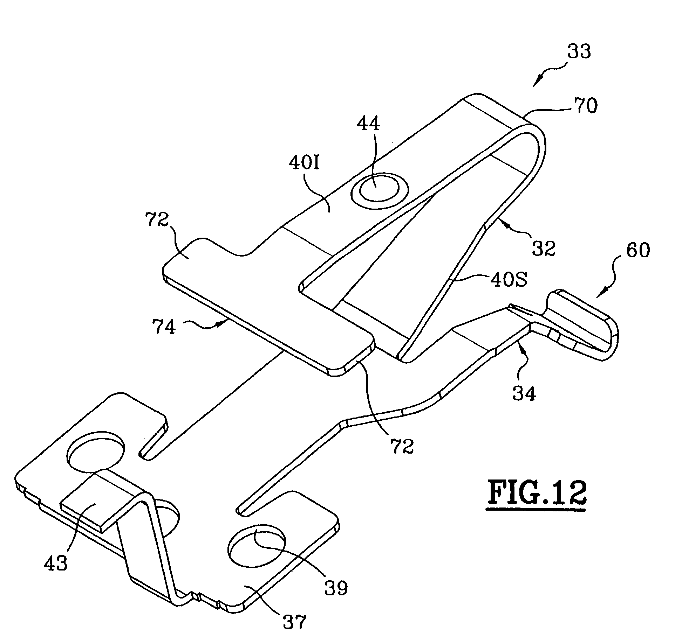

As may be seen in particular in Figures 11 and 12, the upper branch 40S of the control blade 32 extends longitudinally forwards from the heel 37 and is extended by a front elbow or bend 70 which itself connects the lower branch 401 which extends longitudinally rearwards as far as its free end part 42 which has the convex part 44.

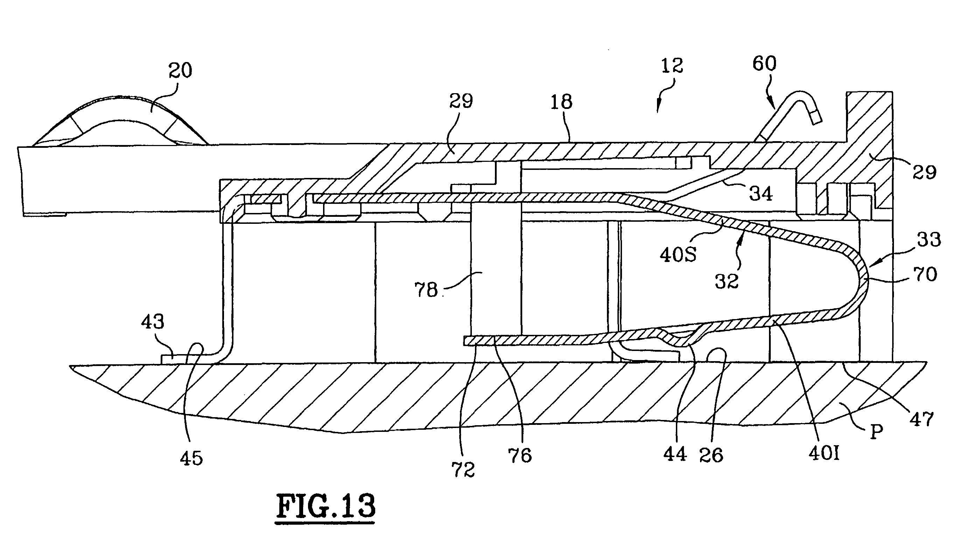

In order to position the convex part 44 very precisely in the rest state and to take into account the substantial reduction in the vertical bearing contact force resulting from the elongation of the contact blade 32, the free end of the lower branch 401 is shaped in the form of a "T", that is to say that it has two opposed transverse tabs 72 which constitute a bearing bar 74 and which bear on the lower end faces 76 of two columns 78 moulded with the support 16, 29 and which extend vertically downwards. This arrangement, as may be seen in Figure 13, allows the convex part 44 to be precisely positioned with respect to the contact pad 26.

When the card C actuates the control lever 34, the bearing points formed by the lower ends 76 of the columns 78 exert a magnifying effect on the bearing contact force of the convex part 44 on the upper face 13, 26 of the printed-circuit board P, preventing the free end of the lower branch 401 of the control blade 32 from rising in order to obtain a bearing contact force equivalent to that in the first embodiment.

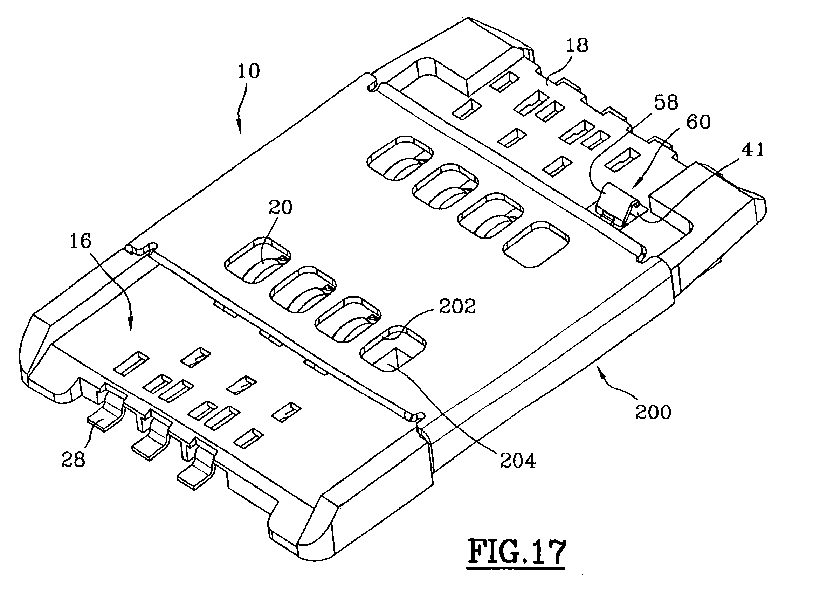

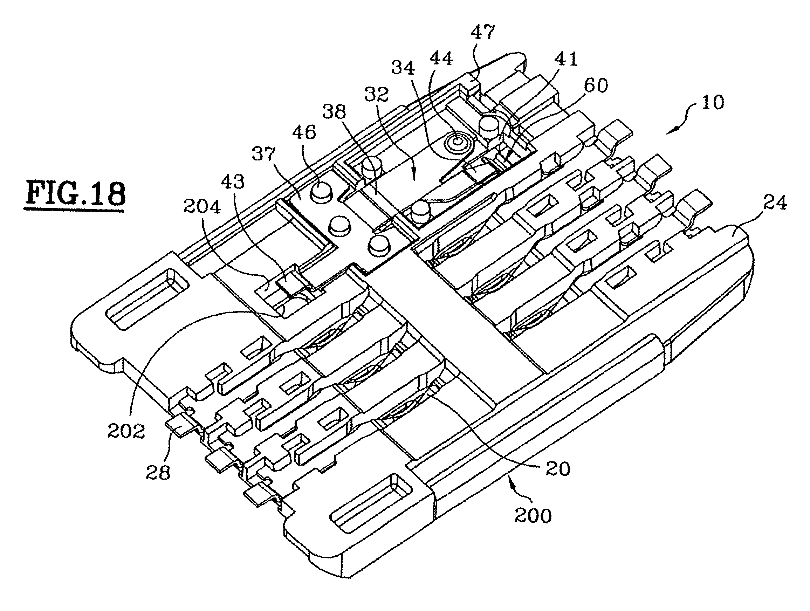

The embodiment illustrated in Figures 17 to 19, in which a connector of the type described and illustrated in document EP-A-0,738,983 is shown, will now be described.

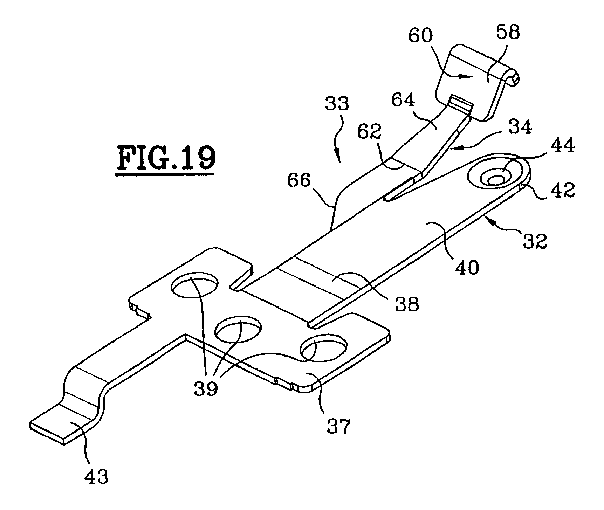

As may be seen in particular in Figure 19, the width of the connection tab 43 has been reduced in order to allow it to be infrared-reflow soldered through one 202 of the standardized openings (for testing the connector) in the metal cover 200 of the connector. The reflow beam, after having passed through the opening 202, then passes through a hole 204 in the insulating support 16, while the control pedal 60 extends through a hole 41. This design avoids having to use too long a tab 43.

## Claims

1. A system comprising a printed-circuit board (P) and a switch (12), the switch being designed to be mounted on said printed-circuit board (P), for detecting the presence of a smart card (C) in a read/write apparatus, the switch having a casing (29) and means for controlling tripping of the switch which, means for controlling are adapted to engage with the front transverse edge (50) of the card (C), and wherein the means for controlling the tripping comprise :
- an elastically deformable control blade (32), a first end (37) of which is embedded in the casing (29) of the switch and the second end (42, 44) of which engages with a device (26) for tripping the switch; and
- a control lever (34) which acts on the second end (42) of the control blade (32) and which is capable of pivoting about an axis parallel to the plane of the card (C) in response to a control force which is applied to it by the front transverse edge (50) of the card (C),
**characterized in that** the control blade is a conducting blade (32) whose embedded first end (37) is extended by a tab (43) for electrical connection to a conducting track (45) on the printed-circuit board (P), and **in that** the means for controlling the tripping of the switch further comprise another conducting track (26) on the facing upper face (13) of the printed-circuit board (P) with which other conducting track (26) in the presence of the card (C) in the inserted position, the second end (42, 44) of the control blade (32) engages in order to cause electrical closure of the switch.

2. System according to Claim 1, **characterized in that**, in the presence of the card (C) in the inserted position, the control lever (34) acts on the second end (42) of the control blade (32) against the resilience of the blade.

3. System according to Claim 2, **characterized in that** the control lever (34) is made as one piece with the control blade (32, 40).

4. System according to either of Claims 2 and 3, **characterized in that** the control lever (34) has a control ramp (58) with which the front transverse edge (50) of the card (C) engages.

5. System according to any one of the preceding claims, **characterized in that** the control blade (32) is approximately plane and extends longitudinally in a direction approximately parallel to the direction (I) of insertion of the card (C).

6. System according to any one of Claims 1 to 4, **characterized in that** the control blade (32) is shaped like a hairpin with two branches (401, 40S) which extend in a direction approximately parallel to the direction (I) of insertion of the card (C), which are connected by an approximately 180° bend (70), and among which the end (37) of an upper first branch (40S) is embedded in a casing (29) of the switch and the free end (42, 44) of the lower second branch (401) is capable of engaging with the said other conducting track (26) on the printed-circuit board (P).

7. System according to the preceding claim, **characterized in that** the lower second branch (401) is extended beyond the said free end by at least one tab (72, 74) for vertical positioning of the control blade at rest.

8. System according to any one of the preceding claims, **characterized in that** the second end of the control blade (32), which is capable of engaging with the said other conducting track (26), has a convex contact part (44) whose convexity is turned towards the upper face (13) of the printed-circuit board (P).

9. System according to any one of the preceding claims, **characterized in that** the control lever (34) is mounted so as to pivot about an axis approximately perpendicular to the direction of insertion (I) of the card (C).

10. System according to any one of the preceding claims, **characterized in that** the first end (37) of the control blade (32) is embedded in the material of the casing (29) of the switch.

11. System according to any one of Claims 1 to 9, **characterized in that** the first end (37) of the control blade (32) is fixed into one element of the casing (29) of the switch by hot riveting.

## Patentansprüche

1. System, das eine gedruckte Steckkartenplatine (P) und eine Schaltung (12) aufweist, wobei die Schaltung so konstruiert ist, dass sie auf der genannten Steckkartenplatine (P) angebracht werden kann, und zwar für das Erfassen der Anwesenheit von einer Smart Card (C) in einer Lese-/Schreibvorrichtung, wobei die Schaltung ein Gehäuse (29) und Mittel für die Auslösebetätigung der Schaltung umfasst, wobei die Mittel für die Betätigung so ausgelegt sind, um die vordere Querkante (50) der Karte (C) kontaktieren zu können, und wobei die Mittel für die Auslösebetätigung aufweisen:
- eine elastisch verformbare Betätigungszunge (32), von der ein erstes Ende (37) in einem Gehäuse (29) der Schaltung integriert ist, und von der deren zweites Ende (42, 44) mit einer Vorrichtung (26) für das Auslösen der Schaltung in Kontakt tritt; und
- einen Betätigungshebel (34), der auf das zweite Ende (42) der Betätigungszunge (32) einwirkt, und der in der Lage ist, um eine Achse parallel in Bezug auf die Kartenfläche (C) zu schwenken, und zwar in Reaktion auf einen Betätigungsdruck, der auf diesen von der vorderen Querkante (50) der Karte (C) beaufschlagt wird;
**dadurch gekennzeichnet, dass** die Betätigungszunge eine elektrisch leitfähige Zunge (32) ist, deren integriertes, erstes Ende (37) mit einer Lasche (43) für die elektrische Verbindung mit einer Leiterbahn (45) auf der Steckkartenplatine (P) verlängert ist; und **dadurch gekennzeichnet, dass** die Mittel für die Auslösebetätigung der Schaltung ferner eine weitere Leiterbahn (26) auf der entgegengesetzten Oberfläche (13) der Steckkartenplatine (P) aufweisen, mit der - während der Anwesenheit der Karte (C) in der eingeführten Position - die weitere Leiterbahn (26) das zweite Ende (42, 44) der Betätigungszunge (32) kontaktiert, um einen geschlossenen, elektrischen Kontakt der Schaltung herbeizuführen.

2. System gemäß Anspruch 1, **dadurch gekennzeichnet, dass** während der Anwesenheit der Karte (C) in der eingeführten Position der Betätigungshebel (34) auf das zweite Ende (42) der Betätigungszunge (32) gegen die Spannkraft der Betätigungszunge einwirkt.

3. System gemäß Anspruch 2, **dadurch gekennzeichnet, dass** der Betätigungshebel (34) einstückig mit der Betätigungszunge (32, 40) hergestellt ist.

4. System gemäß den beiden Ansprüchen 2 und 3, **dadurch gekennzeichnet, dass** der Betätigungshebel (34) eine Betätigungsrampe (58) aufweist, mit der die vordere Querkante (50) der Karte (C) in Eingriff gelangt.

5. System gemäß einem der voranstehenden Ansprüche, **dadurch gekennzeichnet, dass** die Betätigungszunge (32) in etwa flach ist und sich der Länge nach in eine Richtung erstreckt, die ungefähr parallel in Bezug auf die Einsteckrichtung (I) der Karte (C) verläuft.

6. System gemäß einem der Ansprüche 1 bis 4, **dadurch gekennzeichnet, dass** die Betätigungszunge (32) wie eine Haarnadelkurve mit zwei Abzweigungen (401, 40S) geformt ist, welche sich in eine Richtung erstrecken, die in etwa parallel in Bezug auf die Einsteckrichtung (I) der Karte (C) verläuft, welche mit einer ungefähren 180°-Krümmung (70) verbunden sind, und von der das Ende (37) einer oberen, ersten Abzweigung (40S) in einem Gehäuse (29) der Schaltung integriert ist, und von der das freie Ende (42, 44) der unteren, zweiten Abzweigung (40I) in der Lage ist, die erwähnte, weitere Leiterbahn (26) auf der Steckplatine (P) zu kontaktieren.

7. System gemäß dem voranstehenden Anspruch, **dadurch gekennzeichnet, dass** sich die untere, zweite Abzweigung (40I) nach dem freien Ende von zumindest einer Lasche (72, 74) für das vertikale Positionieren der Betätigungszunge in den Ruhezustand erstreckt.

8. System gemäß einem der voranstehenden Ansprüche, **dadurch gekennzeichnet, dass** das zweite Ende der Betätigungszunge (32), das mit der weiteren Leiterbahn (26) in Kontakt treten kann, ein konvexes Kontaktteil (44) aufweist, dessen Wölbung zur Oberseite (13) der Steckplatine (P) gerichtet ist.

9. System gemäß einem der voranstehenden Ansprüche, **dadurch gekennzeichnet, dass** der Betätigungshebel (34) so angebracht, dass er um eine Achse annähernd senkrecht zur Einsteckrichtung (I) der Karte (C) schwenken kann.

10. System gemäß einem der voranstehenden Ansprüche, **dadurch gekennzeichnet, dass** das erste Ende (37) der Betätigungszunge (32) in dem Materialteil des Schaltungsgehäuses (29) integriert ist.

11. System gemäß einem der Ansprüche 1 bis 9, **dadurch gekennzeichnet, dass** das erste Ende (37) der Betätigungszunge (32) in einem Element des Schaltungsgehäuses (29) durch ein Warmnieten fixiert ist.

## Revendications

1. Système comportant une plaque à circuit imprimé (P) et un commutateur (12), le commutateur étant conçu pour être monté sur ladite plaque à circuit imprimé (P), pour détecter la présence d'une carte (C) à mémoire électronique dans un dispositif de lecture-écriture, le commutateur comportant un boîtier (29) et des moyens de commande du déclenchement du commutateur, lesdits moyens de commande étant adaptés à coopérer avec le bord transversal antérieur (50) de la carte (C), et dans lequel les moyens de commande du déclenchement comportent :
- une lame de commande (32) déformable élastiquement dont une première extrémité (37) est encastrée dans un boîtier (29) du commutateur et dont la seconde extrémité (42, 44) coopère avec un organe (26) de déclenchement du commutateur ; et
- un levier de commande (34) qui agit sur la seconde extrémité (42) de la lame de commande (32) et qui est susceptible de pivoter autour d'un axe parallèle au plan de la carte (C) en réponse à un effort de commande qui lui est appliqué par le bord transversal antérieur (50) de la carte (C) ;
**caractérisé en ce que** la lame de commande est une lame conductrice (32) dont la première extrémité encastrée (37) se prolonge par une patte (43) de raccordement électrique à une piste conductrice (45) de la plaque à circuit imprimé (P), et **en ce que** les moyens de commande du déclenchement du commutateur comportent de plus une autre piste conductrice (26) sur la face supérieure en vis-à-vis (13) de la plaque à circuit imprimé (P), avec laquelle autre piste conductrice (26), en présence de la carte (C) en position insérée, coopère la seconde extrémité (42, 44) de la lame de commande (32) pour provoquer la fermeture électrique du commutateur.

2. Système selon la revendication 1, **caractérisé en ce que**, en présence de la carte (C) en position insérée, le levier de commande (34) agit sur la seconde extrémité (42) de la lame de commande (32), à l'encontre de l'élasticité de la lame.

3. Système selon la revendication 2, **caractérisé en ce que** le levier de commande (34) est réalisé venu de matière avec la lame de commande (32, 40).

4. Système selon l'une des revendications 2 ou 3, **caractérisé en ce que** le levier de commande (34) comporte une rampe de commande (58) avec laquelle coopère le bord transversal antérieur (50) de la carte (C).

5. Système selon l'une quelconque des revendications précédentes, **caractérisé en ce que** la lame de commande (32) est sensiblement plane et s'étend longitudinalement selon une direction sensiblement parallèle à la direction (I) d'introduction de la carte (C).

6. Système selon l'une quelconque des revendications 1 à 4, **caractérisé en ce que** la lame de commande (32) est conformée en épingle à cheveux avec deux branches (401, 40S) qui s'étendent selon une direction sensiblement parallèle à la direction (I) d'introduction de la carte (C), qui sont reliées par un pli (70) sensiblement à 180° et parmi lesquelles l'extrémité (37) d'une première branche supérieure (40S) est encastrée dans un boîtier (29) du commutateur et l'extrémité libre (42, 44) de la seconde branche inférieure (401) est susceptible de coopérer avec ladite autre piste conductrice (26) de la plaque à circuit imprimé (P).

7. Système selon la revendication précédente, **caractérisé en ce que**, la seconde branche inférieure (401) se prolonge au delà de ladite extrémité libre par au moins une patte (72, 74) de positionnement vertical de la lame de commande au repos.

8. Système selon l'une quelconque des revendications précédentes, **caractérisé en ce que** la seconde extrémité de la lame de commande (32) qui est susceptible de coopérer avec ladite autre piste conductrice (26) comporte une partie bombée de contact (44) dont la convexité est tournée vers la face supérieure (13) de la plaque à circuit imprimé (P).

9. Système selon l'une quelconque des revendications précédentes, **caractérisé en ce que** le levier de commande (34) est monté pivotant autour d'un axe sensiblement perpendiculaire à la direction d'introduction (I) de la carte (C).

10. Système selon l'une quelconque des revendications précédentes, **caractérisé en ce que** la première extrémité (37) de la lame de commande (32) est encastrée dans le matériau du boîtier (29); du commutateur.

11. Système selon l'une quelconque des revendications 1 à 9, **caractérisé en ce que** la première extrémité (37) de la lame de commande (32) est fixée par rivetage à chaud dans un élément du boîtier (29) du commutateur.
